# EUROPEAN PATENT APPLICATION

(11) **EP 3 483 780 A1**
(43) Date of publication of application: **15.05.2019**
(21) Application number: 17201187.6
(22) Date of filing: 10.11.2017
(51) Int. Cl.: G06K 9/00, G06K 9/32

(54) **CLASSIFICATION AND IDENTIFICATION SYSTEMS AND METHODS**

(71) Applicant: SKIDATA AG, 5083 Grödig/Salzburg (AT)
(72) Inventor: HAMZIC, Armin, A-5083 Salzburg (AT); WENNINGER, Christian, A-5083 Salzburg (AT); KOEPPL, Felix, A-5083 Salzburg (AT)
(74) Representative: Karakatsanis, Georgios

(57) **Abstract**

A system and method of identifying food or beverage products are disclosed. An image of the product is captured along with data indicating where the product is in the image, for example, data from a stereoscopic camera. The portion of the image showing the product is extracted and its features are compared with predetermined models of a range of products to determine a preliminary identity of the product. As a cross-check, physical properties of the product are obtained, such as weight and temperature, and these are compared with expected physical properties corresponding to the potential identity. If the physical properties of the product are consistent with the expected physical properties, the preliminary identity of the product is the identity of the product.

## Description

### FIELD

The present disclosure relates to a classification system and method, and an identification system and method. More particularly, but not exclusively, the present disclosure classifies and identifies food and beverages.

### BACKGROUND

Self-service check out machines, for example located at a supermarket as an alternative to a cashier-staffed checkout, typically read product barcodes or require the user to input a product selection, e.g. using a touchscreen display. Generally, the user then places products into a "bagging area" comprising a weighing scale which is used to verify the weight of the product against previously stored information as a security measure to ensure that user has placed the scanned product in the "bagging area".

### BRIEF DESCRIPTION OF THE DRAWINGS

Specific embodiments are now described by way of example with reference to the drawings, in which:
Figure 1 illustrates a block diagram of a product classification system;
Figure 2 illustrates a flow chart of a method of classifying products;
Figure 3 illustrates a block diagram of a product identification system;
Figure 4 illustrates a flow chart of a method of identifying products; and
Figure 5 illustrates a block diagram of one implementation of a computing device.

### DETAILED DESCRIPTION OF THE DRAWINGS

In overview, a system and method of identifying food or beverage products are disclosed. An image of the product is captured along with data indicating where the product is in the image, for example, data from a stereoscopic camera. The portion of the image showing the product is extracted and its features are compared with predetermined models of a range of products to determine a preliminary identity of the product. As a cross-check, physical properties of the product are obtained, such as weight and temperature, and these are compared with expected physical properties corresponding to the potential identity. If the physical properties of the product are consistent with the expected physical properties, the preliminary identity of the product is the identity of the product.

In some aspects of the disclosure, a computer-implemented method of identifying a product in a sensor area is provided. The product is a food or a beverage. The method comprises receiving position data indicative of a position of the product in the sensor area. An image of the sensor area is received. The image may be received at substantially the same time as the position data. A portion of the image corresponding to the product based on the position data is determined. Using the portion of the image, a preliminary identity of the product based on a plurality of predetermined models is determined. The plurality of predetermined models may be stored in a model database. The plurality of predetermined models includes a model of the product, and each of the predetermined models is associated with respective expected physical properties. Physical property data indicative of one or more physical properties of the product is received. The identity of the product is determined to be the preliminary identity if the physical property data is consistent with the expected physical properties.

The method enables products to be identified without requiring the product to be marked with a machine-readable code such as a barcode or QR code. Determining a portion of the image corresponding to the product increases the accuracy of the determining of the preliminary identity by removing irrelevant information from the image before the portion of the image is compared against the models in the model database. Further, comparing the physical property data of the product with the expected physical properties increases the accuracy of the identification by taking into account features of the product in addition to the appearance of the product.

The term "consistent with" is to be understood to mean that the physical property data substantially matches or corresponds with the expected physical property. For example, the weight of the product in the sensor area may be within a predetermined threshold difference from the expected weight of the product.

Further aspects of the disclosure relate to a system for identifying a product in a sensor area. The product is a food or beverage. The system comprises a depth sensor arranged to provide position data indicative of a position of the product in the sensor area and a camera arranged to capture an image of the sensor area. The depth sensor may be a stereoscopic camera. The system also comprises a physical property sensor arranged to provide physical property data indicative of one or more physical properties of the product.

For example, the physical property sensor may be one or more of a thermographic camera, a thermometer, a weighing scale, a 2D or preferably 3D lidar sensor, and a radar sensor. The system also comprises a model database having a plurality of predetermined models of products including a model of the product. Each of the predetermined models is associated with respective expected physical properties. Additionally, the system comprises a processor arranged to determine a portion of the image corresponding to the product based on the position data, determines, using the portion of the image, a preliminary identity of the product based on the plurality of predetermined models in the model database, and determines an identity of the product by comparing the physical property data with the expected physical properties associated with the preliminary identity.

It will be well understood that this system is not a limited example, and that other sensors may be used either in addition or instead of those of the system described above. For example, ultrasonic sensors may be used to detect the presence and quantity of objects in the sensor area, as well as material properties such as how hard or soft objects in the sensor area are, i.e. object density. Near-infrared spectroscopy sensors could also be used type to detect chemical composition of objects in the sensor area. The model database may for example comprise data related to the near-infrared spectroscopy waves, or sub database related to near-infrared spectroscopy waves. This can be used, for example, in the detection of different beverages such as coffee or water.

It will be well understood as well, that a camera may be optional. The system may only comprise at least one or more sensors to be able to provide at least one or more relevant information on the identity of the food or beverage.

Further aspects of the disclosure relate to a computer-implemented method of classifying a product. The method comprises receiving an identity of the product. Images relating to the identity are obtained from a plurality of sources. A model of the product is generated based on the obtained images using a machine learning algorithm. Expected physical properties of the product are received and associated with the model. The model and its associated expected physical properties are stored in a database.

By associating the model with its associated expected physical properties, the expected physical properties can be used to increase the accuracy of a product identification method that uses the model.

Further aspects of the disclosure relate to a system comprising a processor configured to perform the steps of the method described above, a non-transitory computer readable medium having computer-executable instructions to cause a computer system to perform the steps of the method as described above, and a computer program product comprising instructions which, when the program is executed by a computer, cause the computer to carry out the steps of the method as described above.

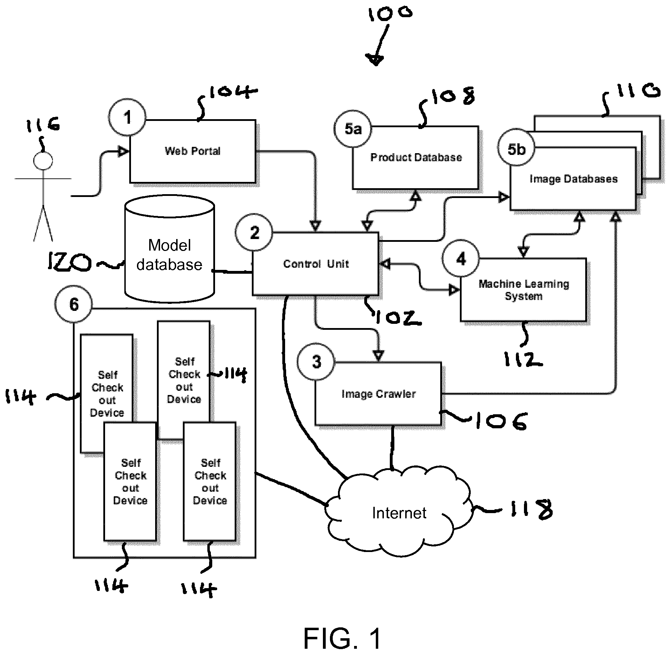

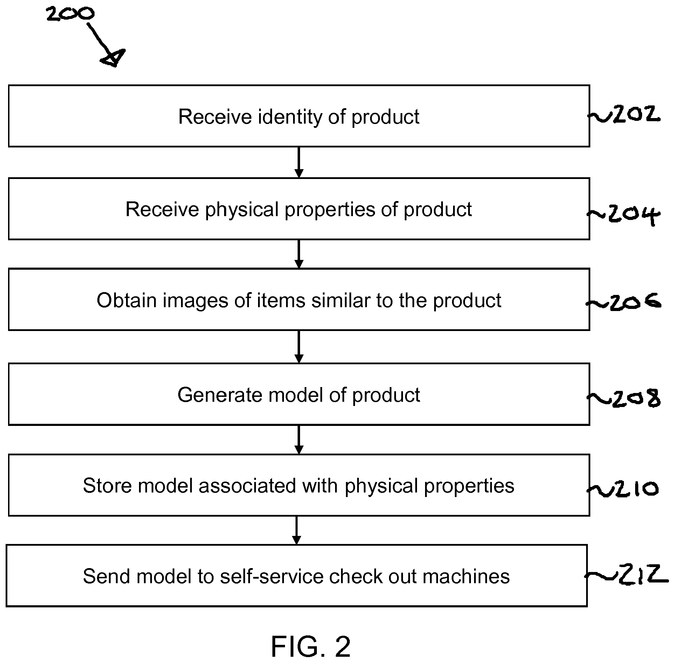

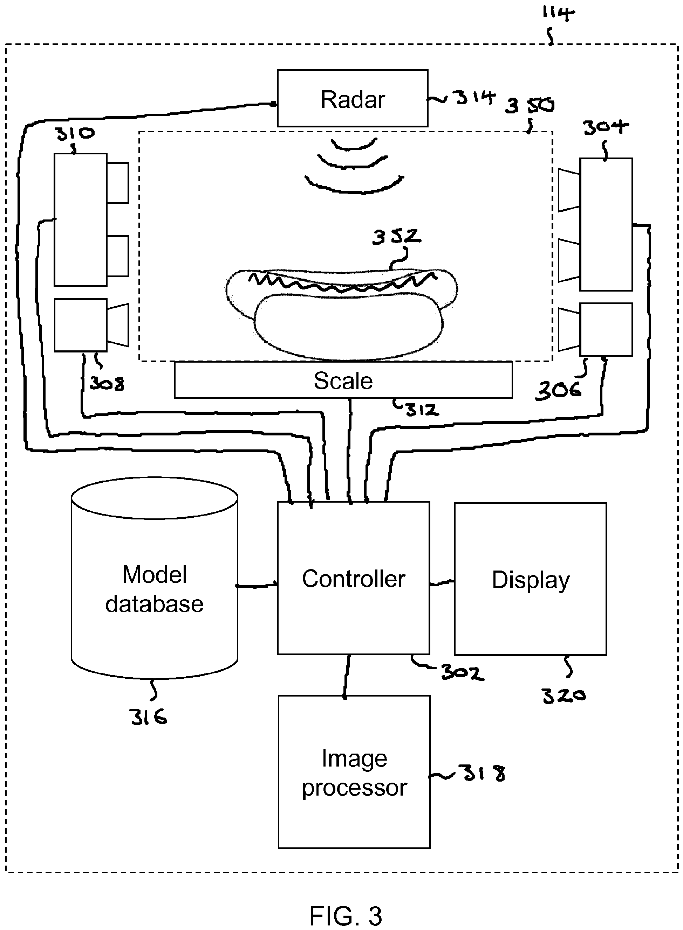

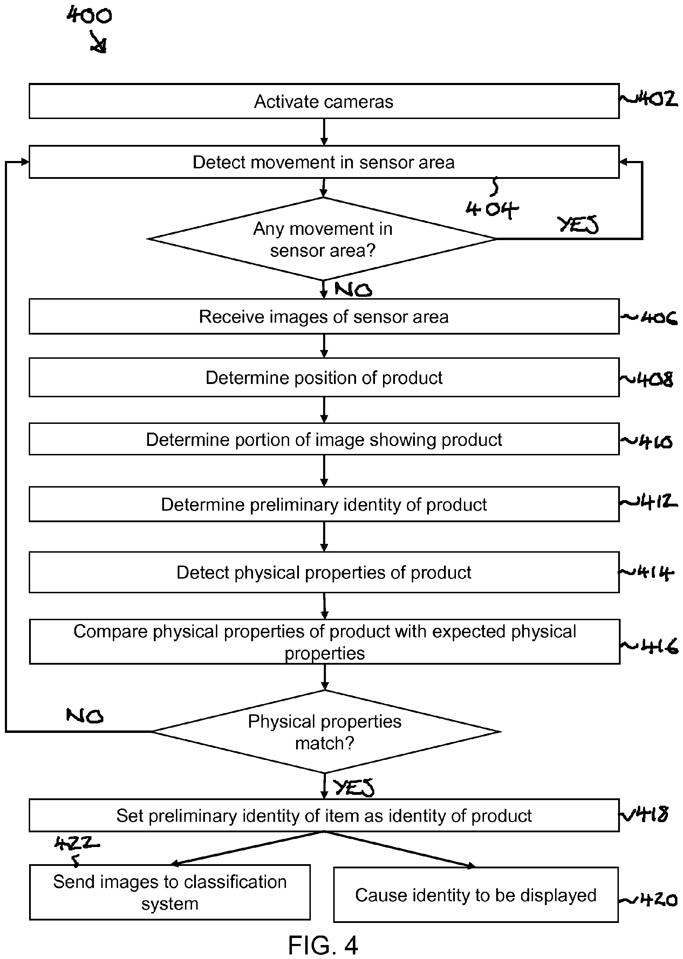

A classification system, described with reference to Figures 1 and 2, uses machine learning algorithms applied to images of products to determine models for each of a range of products. The models are sent to self-service check out machines, described with reference to Figures 3 and 4, which use the models, along with a plurality of sensors to, identify products.

With reference to Figure 1, a classification system for classifying products 100 comprises a control unit 102, a web portal 104, an image crawler 106, a product database 108, a plurality of image databases 110, a machine learning system 112, and a model database 120. The web portal 104, the image crawler 106, the product database 108, the plurality of image databases 110, the machine learning system 112, and the model database 120 are each operatively connected to the control unit 102. The control unit 102 is also connected to a plurality of self-service check out machines 114, also called self check out devices. As the self-service check out machines 114 may not be located in the same physical location at the classification system 100, the self-service check out machines 114 are connected to the classification system 100 via the internet 118. In other embodiments, the self-service check out machines 114 are connected to the classification system 100 through a local network connection. In other embodiments, the self-service check out machines have the classification system locally on the device and do not need any network connection, i.e. the self-service check out machines can work offline, independently of any internet communication.

The web portal 104 is arranged to provide a user interface for a user 116 to enter inputs to the control unit 102. The web portal 104 may be accessed on a computer or tablet through a web browser. The product database 108 stores information about food and beverage products. For example, product names along with their size and weight entered by the user into the web portal 104 are stored in the product database 108.

The image crawler 106 is connected to the plurality of image databases 110. The image crawler 106 is arranged to search the internet 118 for 2D and 3D images of products in the product database 108. For example, the image crawler 106 searches based on the name of the product for images named or tagged with the same product name. The image crawler 106 may also be arranged to search for images of products, e.g. taken or identified by the user, that are stored on a repository on a local network or database stored on the system. Any images found by the image crawler 106 are stored in the image databases 110. The self-service check out machines 114 carry out a process 400 of identifying products, as will be described below in more detail. Part of the process 400 includes 2D and 3D images being taken of a product, and once the process 400 has identified the product, the 2D and 3D images are sent to the classification system 100 and stored in the image databases 110.

The machine learning system 112 is configured to train a model of each product in the product database 108 using the images of the respective product from the image databases 110 and machine learning methods known in the art. The machine learning methods may develop the model based on features in the images of a product such as shape, size, texture, and colour of the product. The models generated by the machine learning system 112 are stored in the model database 120 and sent to the self-service check out machines 114 by the control unit 102.

A method of classifying products 200 is described with reference to Figure 2. At step 202, the user 116 enters the name of a product into the classification system 100 via the web portal 104. At step 204, the user 116 enters the physical properties of the product such as size, weight, serving temperature and quantity of items making up the product. Additional features from physical properties like liquid, humidity, material types e.g. plastic, glass may be added automatically through machine learning or entered manually by the user. The information entered by the used in steps 202 and 204 is stored in the product database 108. If, for example, the user 204 enters that a warm meal is served on a plate, the method may associate the meal with both a ceramic and plastic plate.

At step 206, the image crawler 106 obtains images of the product, or similar products, from the internet 118 based on the name of the product. For example, the filename of the images may contain the product name and/or metadata of the image may relate to the product name. The images found are stored in the image databases 110.

At step 208, the machine learning system 112 generates a model of the product for computer vision. The machine learning system 112 uses the images of the product obtained at step 206 to train the model. As are known in the art, the machine learning system can be either a supervised learning method and/or unsupervised learning method and/or reinforcement learning method. Information may be pushed manually to the machine learning system for example to enrich the databases.

At step 210, the model generated at step 208 is stored, along with the physical properties received at step 204, in the model database 120. Step 202 to 210 may be repeated for each product in the user's product range. At step 212, the models stored in the model database 120 are sent to each of the self-service check out machines 114 via the internet 118.

Accordingly, each of the self-service check out machines 114 comprises a copy of the model database. As will be described with reference to Figures 3 and 4, the self-service check out machines 114 are each arranged to identify products by obtaining images of products and comparing the images with the models in the model database to determine a match.

With reference to Figure 3, a self-service check out machine 114 comprises a controller, 302, a stereoscopic camera 304, a camera 306, a thermographic camera 308, a 2D or 3D lidar sensor 310, a weighing scale 312, a radar sensor 314, a model database 316, an image processor 318 and a display 320. In some embodiments, the self-service check out machine 114 comprises a payment card reader. The stereoscopic camera 304, the camera 306, the thermographic camera 308, the lidar sensor 310, the weighing scale 312, the radar sensor 314, the model database 316, the image processor 318 and the display 320 are each operatively connected to the controller 302.

The stereoscopic camera 304, the camera 306, the thermographic camera 308, the lidar sensor 310, the weighing scale 312, and the radar sensor 314 are each directed to obtain their data from a sensor area 350. The self-service check out machine 114 is arranged to identify products in the sensor area 350, as described with reference to Figure 4. A product 352, e.g. a hotdog in a bun, may be placed in the sensor area 350 such that the product 352 is arranged on the weighing scale 312 and in view of the stereoscopic camera 304, the camera 306, the thermographic camera 308 and the lidar sensor 310.

The weighing scale 312 is arranged to weigh products placed on it. The thermographic camera 308 is arranged to detect temperature of products in the sensor area 350. In other embodiments, an infrared thermometer or other non-contact thermometer is used instead of a thermographic camera to detect temperature of products in the sensor area 350.

The 2D or 3D lidar sensor 310 is arranged to determine quantity of products in the sensor area 350. The 2D or 3D lidar sensor emits light at a region of the sensor area and determines the time taken for the light to return to the sensor. Based on this information, a 2D or 3D point cloud is created of the scanning area, this point cloud shows the quantity and also the position of products.

The radar sensor 314 is arranged to determine volumes of products, i.e. amount of product, in the sensor area 350. The radar sensor emits a radio wave at a region of the sensor area and determines a change in frequency of the wave reflected back to the radar sensor. As the geometry of the sensor area is known, the change in frequency of the reflected wave can be used to calculate the volume of products. The detected volume of objects in the sensor area can be used to detect the presence of a product even if the preliminary identity of the product cannot be determined. Advantageously, when no result has been found from the scanned images, determining additional information from the radar sensor as "there is something on the plate" may enrich the system with a picture of the plate, and may avoid that the user is cheating the system when an image is missing or not found.

The stereoscopic camera 304 is arranged to capture two images of the sensor area 350 with a predetermined offset at substantially the same time. The stereoscopic camera may be arranged to capture stereoscopic 3D images of the sensor area 350. The camera 306 is arranged to capture an image of the sensor area 350, for example an image in the visible spectrum. The relative position between the stereoscopic camera 304 and the sensor area 350 is predetermined. Similarly, the relative position between the camera 306 and the sensor area 350 is predetermined. Accordingly, the relative position between the camera 306 and the stereoscopic camera 304 is predetermined.

The image processor 318 is configured to determine depth maps from the pairs of images from the stereoscopic camera 304, and to extract a portion of the image from the camera 306 relating to where the product is. The predetermined offset between pair of images creates parallax between the two images which can be used to determine a depth map of the pixels in the images as is known in the art. Different algorithms are used to determine the depth from stereoscopic image such as semi global matching algorithm and block-matching algorithm. Different post processing methods may also be applied to remove errors like uniform texture-less areas, half occlusions, etc. to remove errors prior to processing the pair of images.

A depth map of the sensor area 350 that is empty, i.e. without a product in the sensor area, may be used as a reference. For example, the reference depth map may be used to determine the position of products in the sensor area by comparing with a depth map derived from pairs of images taken by the stereoscopic camera 304 of the product in the sensor area. The position of the product in the depth map is then used to determine the portion of the image from the camera 306 which contains the product. The determination of the portion of the image uses the predetermined position of the camera 306 relative to the stereoscopic camera 304.

The model database 316 stores a plurality of models of products and their associated physical properties, and may comprise a copy of the models from the model database 120 in the classification system 100. The image processor 318 is also configured to determine preliminary identities of products in the sensor area 350 based on the portion of the image from the camera 306 which contains the product and the plurality of models of products in the model database 316.

The display 320 is arranged to display information such as a determined identity of the product. The display may be a touchscreen display that enables users to select options on screen.

A method of identifying products 400 is described with reference to Figure 4. At step 402, the stereoscopic camera 304 and the camera 306 are activated. The activation may be initiated by detection of a change in weight on the weighing scale 312 indicative of a user placing a product on the weighing scale. In other embodiments, the activation is initiated by a user actuating a button or switch. At step 404, the stereoscopic camera 304 and/or the camera 306 are used to detect whether there is any movement in the sensor area 350. If there is movement in the sensor area, then step 404 is repeated. If there is no movement in the sensor area for a predetermined length of time, the process 400 continues to step 406.

Once the cessation of movement in the sensor area is detected, at step 406, the image processor 318 receives a pair of images from the stereoscopic camera 304 and an image from the camera 306. The images from the cameras 304, 306 are taken at substantially the same time.

At step 408, the image processor 318 determines the position of the product 352 in the sensor area from the pair of images from the stereoscopic camera 304, for example by determining a depth map of the sensor area. In other embodiments, the position of the product is determined using only one camera from the stereoscopic camera to take one 2D image and apply object detection based on machine learning methods like convolutional neural networks. In other embodiments, the position of the product is determined using the 2D or 3D lidar sensor 310 to determine a depth map of the sensor area. In other embodiments, the identification system comprises an illuminator arranged to create an infrared dot pattern in the sensor area, for example as described in WO2007/043036 which is incorporated herein by reference. In such embodiments, at step 408, position of the product is determined using the illuminator to create an infrared dot pattern in the sensor area. The thermographic camera 308 then takes an image of the sensor area 350 and sends the image to the image processor 318. The image processor 318 compares the relative positions of the dots in the image to expected positions of the dots to determine a depth map of the sensor area.

At step 410, the image processor 318 determines a portion of the image from the camera 306 showing the product based on the determined position of the product in the sensor area from step 408. For example, as the relative position between the camera 306 and the sensor area 350 is predetermined, the depth map determined from the pair of images taken by the stereoscopic camera 304 can be mapped onto the image from the camera 306 in a predetermined correspondence.

At step 412, the image processor 318 determines a preliminary identity of the product in the portion of the image. This determination at step 412 is based on a convolutional neural network that compares features in the portion of the image with the models in the model database 316. Using the comparison, the preliminary identity is determined as a model that is the most likely candidate, i.e. a model with the most features in common with the product in the portion of the image. This pre-trained multi-layer neural network uses a plurality of layers to extract features including, but not limited to size, colour, texture of the object. Each layer may have different automated feature extraction methods applied as are known in the art.

In cases where multiple products are placed in the sensor area together, a portion of the image from the camera 306 is determined for each product in the sensor area. At step 412, a preliminary identity is determined for each portion of the image.

At step 414, the controller receives data indicative of the physical properties of the product including the temperature, the number of items, the weight and the volume from the thermographic camera 308, the lidar sensor 310, the weighing scale 312, the radar sensor 314 respectively. At step 416, the physical properties of the product in the sensor area are compared with expected physical properties associated with the product based on the preliminary identity using the physical property data of the model in the model database 316. Another machine learning method for comparing physical properties of a product with expected physical properties may be used: a neural network is trained, i.e. using supervised and/or unsupervised (self-organized) training based on the manually entered and/or automatically populated physical properties at step 204, and using images from images database 110 to create a model of the expected physical properties for each product. This advantageously provides more accurate information about the objects in the scanning area. A neural network is preferably used for combining this multi-sensor data as it constructs relationships between inputs and outputs. The models of the expected physical properties can be compared with the detected physical properties.

If all the physical properties of the product are not consistent with the expected physical properties associated with the model, then the identity of the product is not the preliminary identity and the process returns to step 404. In some embodiments, the preliminary identity is rejected as the identity of the product if at least one of the physical properties of the product does not match the expected physical properties associated with the model.

If at least one of the physical properties of the product is consistent with the expected physical properties associated with the model, then at step 418, the identity of the product is determined to be that of the preliminary identity. As a result, at step 420, a representation of the product is output on the display 320. This may enable, for example, the user to confirm the determined identity of the product and then provide payment for the product.

The term "consistent with" is to be understood to mean that the physical property data substantially matches or corresponds with the expected physical property. For example, the weight of the product in the sensor area may be within a predetermined threshold difference from the expected weight of the product.

Following step 418, the controller optionally sends the images from the cameras 304, 306 to the classification system 100. This feedback to the classification system enables the model of the product to be refined using additional images of correctly-identified products from the self-service check out machines 114.

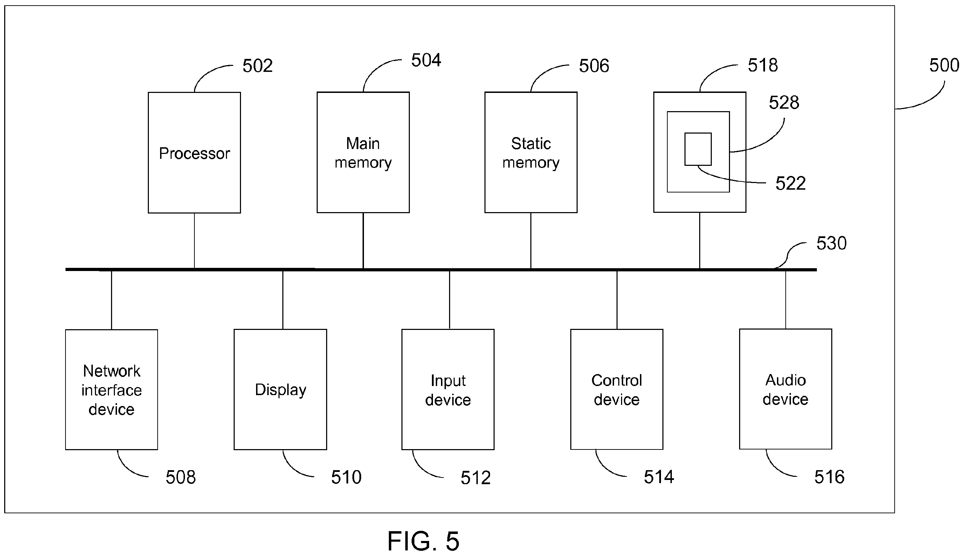

Figure 5 illustrates a block diagram of one implementation of a computing device 500 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 500 includes a processing device 502, a main memory 504 (e.g., read-only memory (ROM), flash memory, dynamic random-access memory (DRAM) such as synchronous DRAM (SDRAM) or Rambus DRAM (RDRAM), etc.), a static memory 506 (e.g., flash memory, static random-access memory (SRAM), etc.), and a secondary memory (e.g., a data storage device 515), which communicate with each other via a bus 530.

Processing device 502 represents one or more general-purpose processors such as a microprocessor, central processing unit, or the like. More particularly, the processing device 502 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 502 may also be one or more special-purpose processing devices such as an application specific integrated circuit (ASIC), a field programmable gate array (FPGA), a digital signal processor (DSP), network processor, or the like. Processing device 502 is configured to execute the processing logic (instructions 522) for performing the operations and steps discussed herein.

The computing device 500 may further include a network interface device 505. The computing device 500 also may include a video display unit 510 (e.g., a liquid crystal display (LCD)), an alphanumeric input device 512 (e.g., a keyboard or touchscreen), a cursor control device 514 (e.g., a mouse or touchscreen), and an audio device 516 (e.g., a speaker).

The data storage device 515 may include one or more machine-readable storage media (or more specifically one or more non-transitory computer-readable storage media) 525 on which is stored one or more sets of instructions 522 embodying any one or more of the methodologies or functions described herein. The instructions 522 may also reside, completely or at least partially, within the main memory 504 and/or within the processing device 502 during execution thereof by the computer system 500, the main memory 504 and the processing device 502 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W, DVD or Blu-ray disc.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing ", "generating", "sending," "identifying," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. This system and method can be used in any convenience store, cafeteria, or any place providing self-service areas for food and beverages.

In some embodiments, an additional camera not shown on the drawings, and placed outside the product scanning area is used for sensing the face of the user. It can be for example provided at the entrance of the self-service area or in any convenient place where the face of the user can be captured. The camera is connected to a database of users. A method as known in the art for facial recognition may be used. The database of users also comprise a history of previous foods and beverages chosen by the user, and also allows to search for images in a reduced database to gain processing time: if a specific face of a user is detected, the system is able through the history to have information on habits of the user, and thus search first for images already similar to those in the food history or for equivalent images: a user who does not eat healthy has less chances to eat vegetables than chips, and the first scanned images may be not part of the vegetables ones.

In some embodiments, the additional camera is used in a processing payment method wherein once the user is detected, for example because he is registered in the system, and the food and beverages identity processed, the user can receive a bill directly. The additional camera is used for identification of the user before payment process starts, i.e. by identifying the user, the system is considering past purchase history of that user, thus reducing the list of matching items, and is used for face recognition for payment process.

In some embodiments, if the system cannot detect number of items with high accuracy, the user is requested to confirm the number of items on the computer system via for example the touchscreen of the system. This confirmation by the user is used for image annotation and images are transferred to the image database.

Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method of identifying a product in a sensor area, wherein the product is a food or a beverage, the method comprising:
receiving position data indicative of a position of the product in the sensor area;
receiving an image of the sensor area;
determining a portion of the image corresponding to the product based on the position data;
determining, using the portion of the image, a preliminary identity of the product based on a plurality of predetermined models, wherein the plurality of predetermined models includes a model of the product, and each of the predetermined models is associated with respective expected physical properties;
receiving physical property data indicative of one or more physical properties of the product; and
determining that the identity of the product is the preliminary identity if the physical property data is consistent with the expected physical properties.

2. The method of claim 1, wherein receiving position data comprises receiving a stereoscopic image of the sensor area, and determining the position of the product in the sensor area using the stereoscopic image.

3. The method of any preceding claim, wherein the one or more physical properties of the product comprises one or more of: a temperature of the product; a weight of the product; a quantity of product; and a volume of the product.

4. The method of any preceding claim comprising, prior to receiving position data, receiving an indication that the product is in the sensor area.

5. The method of any preceding claim comprising, prior to receiving position data, determining that there is no movement in the sensor area.

6. The method of any preceding claim comprising causing display of a representation of the identity of the product.

7. A system for identifying a product in a sensor area, wherein the product is a food or beverage, the system comprising:
a depth sensor arranged to provide position data indicative of a position of the product in the sensor area;
a camera arranged to capture an image of the sensor area;
a physical property sensor arranged to provide physical property data indicative of one or more physical properties of the product;
a model database comprising a plurality of predetermined models of products including a model of the product, wherein each of the predetermined models is associated with respective expected physical properties; and
a processor arranged to:
determine a portion of the image corresponding to the product based on the position data;
determine, using the portion of the image, a preliminary identity of the product based on the plurality of predetermined models in the model database; and
determine that the identity of the product is the preliminary identity if the physical property data is consistent with the expected physical properties.

8. The system of claim 7, wherein the depth sensor is a stereoscopic camera.

9. The system of any of claims 7 or 8, wherein the physical property sensor is one or more of: a thermographic camera; a thermometer; a weighing scale; a lidar sensor; and a radar sensor.

10. The system of any of claims 7 to 9, wherein the system is a self-service checkout machine for a cafeteria.

11. A computer-implemented method of classifying a product, the method comprising:
receiving an identity of the product;
obtaining, from a plurality of sources, images relating to the identity;
generating, using a machine learning algorithm, a model of the product based on the obtained images;
receiving expected physical properties of the product;
associating the expected physical properties with the model; and
storing the model and its associated expected physical properties in a database.

12. The method of claim 11 comprising causing a product to be identified using the model.

13. The method of any of claims 11 or 12, wherein the product is a food or a beverage.

14. A system comprising a processor configured to perform the steps of the method of any of claims 1 to 6 or 11 to 13.

15. A computer-readable storage medium comprising instructions which, when executed by a computer, cause the computer to carry out the steps of the method of any of claims 1 to 6 or 11 to 13.

## Amended claims

### Amended claims in accordance with Rule 137(2) EPC.

1. A computer-implemented method of identifying a product in a sensor area, wherein the product is a food or a beverage, the method comprising:
receiving position data indicative of a position of the product in the sensor area, wherein receiving position data comprises receiving a stereoscopic image of the sensor area, and determining the position of the product in the sensor area using the stereoscopic image.;
receiving an image of the sensor area;
determining a portion of the image corresponding to the product based on the position data;
determining, using the portion of the image, a preliminary identity of the product based on a plurality of predetermined models, wherein the plurality of predetermined models includes a model of the product, and each of the predetermined models is associated with respective expected physical properties;
receiving physical property data indicative of one or more physical properties of the product wherein the one or more physical properties of the product comprises one or more of: a temperature of the product; a weight of the product; a quantity of product; and a volume of the product; and
determining that the identity of the product is the preliminary identity if the physical property data is consistent with the expected physical properties.

2. The method of any preceding claim comprising, prior to receiving position data, receiving an indication that the product is in the sensor area.

3. The method of any preceding claim comprising, prior to receiving position data, determining that there is no movement in the sensor area.

4. The method of any preceding claim comprising causing display of a representation of the identity of the product.

5. A system for identifying a product in a sensor area, wherein the product is a food or beverage, the system comprising:
a depth sensor arranged to provide position data indicative of a position of the product in the sensor area;
a camera arranged to capture an image of the sensor area;
a physical property sensor arranged to provide physical property data indicative of one or more physical properties of the product;
a model database comprising a plurality of predetermined models of products including a model of the product, wherein each of the predetermined models is associated with respective expected physical properties; and
a processor arranged to:
determine a portion of the image corresponding to the product based on the position data;
determine, using the portion of the image, a preliminary identity of the product based on the plurality of predetermined models in the model database; and
determine that the identity of the product is the preliminary identity if the physical property data is consistent with the expected physical properties,
wherein the depth sensor is a stereoscopic camera and
wherein the physical property sensor is one or more of: a thermographic camera; a thermometer; a weighing scale; a lidar sensor; and a radar sensor.

6. The system of claim 5 t, wherein the system is a self-service checkout machine for a cafeteria.

7. A computer-implemented method of classifying a product, the method comprising:
receiving an identity of the product;
obtaining, from a plurality of sources, images relating to the identity;
generating, using a machine learning algorithm, a model of the product based on the obtained images;
receiving expected physical properties of the product;
associating the expected physical properties with the model; and
storing the model and its associated expected physical properties in a database.

8. The method of claim 7 comprising causing a product to be identified using the model.

9. The method of any of claims 7 or 18, wherein the product is a food or a beverage.

10. A system comprising a processor configured to perform the steps of the method of any of claims 1 to 4 or 7 to 9.

11. A computer-readable storage medium comprising instructions which, when executed by a computer, cause the computer to carry out the steps of the method of any of claims 1 to 4 or 7 to 9.
